# EUROPEAN PATENT SPECIFICATION

(11) **EP 0 639 313 B1**
(45) Date of publication and mention of the grant of the patent: **14.07.1999**
(21) Application number: 93911806.3
(22) Date of filing: 06.05.1993
(51) Int. Cl.: H04B 7/26, H04J 3/16, H04J 4/00

(54) **A METHOD OF INCREASING INTERFERENCE DIVERSITY IN AN FDMA/TDMA-BASED CELLULAR SYSTEM AND CELLULAR SYSTEM**
VERFAHREN ZUM ERHÖHEN DER INTERFERENZDIVERSITÄT IN FDMA/TDMA IN ZELLULAREN ANORDNUNGEN UND ZELLULARE ANORDNUNG
PROCEDE POUR ACCROITRE LA DIVERSITE DE BROUILLAGE DANS UN SYSTEME CELLULAIRE BASE LUR L'ACCES FDMA/TDMA, ET SYSTEME CELLULAIRE ASSOCIE

(30) Priority: 07.05.1992 FI 922072
(43) Date of publication of application: 22.02.1995
(73) Proprietor: NOKIA TELECOMMUNICATIONS OY, 02150 Espoo (FI)
(72) Inventor: PÖYHÖNEN, Petri, FIN-02730 Espoo (FI)
(74) Representative: Tomlinson, Kerry John
(86) International application number: FI9300196
(87) International publication number: WO9322850

(56) References cited:
- EP-A- 0 407 367
- WO-A-91/13502
- US-A- 5 020 056
- Funkschau, Volume, No. 23, 1990, CLARICE KAM, "HF-Messungen an GSM-Sendern", page 54 - page 55; page 58 - page 59.

## Description

The invention relates to a method of increasing interference diversity in an FDMA/TDMA-based cellular system according to the preamble of the attached claim 1 and to a cellular system according to the preamble of the attached claim 8.

The capacity of cellular networks is limited by a so-called co-channel interference caused by the fact that, according to the known principle of a cellular network, the same radio frequencies are used repeatedly as a reuse pattern defined by frequency planning.

To guarantee a service sufficiently free from interference, a radio network must be planned in view of the worst expectations. This means that the basic planning situation must be assumed to be a continuous interfering signal in a co-channel cell (a cell sharing the same frequencies) and still usually in such a topological arrangement which produces the highest interfering signal (terminal at that edge of the interfering cell which is closest to the interfered cell and transmission powers set to the maximum). To keep the interference caused by this worst case sufficiently low, a reuse pattern sufficiently relaxed is selected for the cellular network.

The planning of a cellular network based on the worst case described above limits the capacity of the system. This has to be considered as a distinct disadvantage, because the situation of the worst case is realized during the operation of the network on rare exceptional occasions only. Accordingly, the network must in practice be provided with extra safety margin compromising the capacity of the network.

The known GSM system has the property of frequency hopping, which spreads the influence of interferers among a larger number of users. According to the frequency-hopping principle, the transmission frequency is changed continuously during transmission of a signal and the receiving frequency during reception, respectively, by using a suitable number of frequencies, e.g. four predetermined frequencies. These frequencies form a so-called hopping sequence. Within one cell, the hopping sequences are mutually synchronized (collisions do not occur between channels of a single cell) and independent of each other among cells with the same allocated frequencies. In the GSM system, frequency hopping is an optional feature for a base station and an obligatory one for a mobile station.

Two kinds of advantages are gained from the use of frequency hopping, namely so-called frequency and interference diversity effects. The desirable effect of frequency diversity is based on the fact that fading conditions are mutually uncorrelated across consequent time slot occurencies, when the frequency of a radio connection is changed sufficiently from one time slot to another. Even stationary (or slowly moving) users, which for a certain frequency are in a fading notch, are then regularly also in a strong field on some other carriers belonging to the hopping sequence. On the other hand, the useful effect of interference diversity is caused by an uncorrelatedness of the hopping sequences, i.e. by the fact that the frequency-hopping sequences of the base stations using the same or nearby frequencies are mutually different, due to which connections interfering each other change when moving from one time slot to another. In this way, the influence of strong interference sources is averaged over several channels. Under the influence of such a spreading, all the users of the network see an average interference level, due to which safety margins can be reduced when dimensioning the network. The result is a denser reuse pattern. The radio system and frequency hopping of the GSM system are described in greater detail in the reference [1] cited (the list of references cited is at the end of the specification).

The efficiency of interference diversity depends decisively on how comprehensively the interferences can be shared among the users of the network (degree of interference diversity). In a cellular system according to the principle of spread spectrum CDMA (Code Division Multiple Access) known per se, all connections use the same radio channel, on which the channels are separated by means of spreading codes as per subscriber. In such a system, the interference diversity is at its maximum and all connections are seen symmetrically by all other channels as small interference contributions. (The principle of spread spectrum CDMA and the systems based thereon are described in greater detail in the reference [2] cited.)

In the frequency-hopping arrangement according to the GSM system, the degree of interference diversity remains considerably lower (and thus the advantages gained therefrom less) than in the spread spectrum CDMA system referred to above. In the frequency-hopping solution of the GSM system, one interferer is seen only by those other subscribers whose hopping chain includes the frequency used by the interferer and whose time slot occurs at the same instant in a time raster as the time slot of the interferer. In order to achieve a high degree of interference diversity, the hopping chain of such a system shall comprise a large number of radio channels (carriers), for instance 4 to 8. For capacity reasons, however, such a large number of transceiver units are not installed in most of the cells, and therefore, more expensive hopping-frequency synthetizers have to be used.

WO-A-9113502 discloses a TDMA cellular radio system using shared-carrier frequency hopping. The channels are collected into a shared pool and allocated on a frame-basis within a carrier reuse diameter to one area during certain time-slots and to another area during other non-overlapping time-slots. However, the document does not show the use of time-slot-hopping as a means for further improving the transmission quality. This document therefore shows the state of the art according to the introduction of claim 1.

US-A-5020056 discloses a method for reducing synchronous fading effects in a TDMA communication system. By varying the position of the time slot assigned to a user from one frame to another, synchronous fading is avoided. However, in this system frequency hopping is not used and coordination of timeslot hopping sequences between different base stations is not presented.

The object of the present invention is thus to provide a method suitable for an FDMA/TDMA-based cellular system, such as the GSM system, of further improving the degree of interference diversity from what is achieved by means of frequency hopping. This is provided by the method of the present invention, which is characterized in that (in addition to a first part of the base stations of the system performing frequency hopping) at least one transmission channel of a second part of the base stations uses at least two separate time slots of a TDMA frame in sequential TDMA frames in accordance with a predetermined repeated sequence and that the sequences used by the separate base stations are mutually coordinated in such a way that at least the sequences used by the cells situated within the range of influence of each other are mutually sufficiently uncorrelated. The cellular system according to the invention again is characterized in what is described in the characterizing portion of the attached claim 8. (In this description, transmission channel means a connection between two communicating parties and time slot a fixed part of a TDMA frame, the timing of which is fixed in relation to the timing of the frame.)

The basic idea of the invention is to let the channels hop also in a time slot raster, in addition to the fact that they hop in a frequency raster; in other words, the idea is that another dimension is introduced for increasing interference diversity in such a manner that a transmission channel (logical connection) uses, instead of a fixed time slot allocation, a number of time slots with a regularly repeated pattern. The principle of the invention is general and concerns all cellular network systems in which time division multiplexing is used and frequency hopping is possible. However, benefits from the invention are best in such systems which offer a considerable number of time slots on one carrier.

To maximize the benefit from the method, it is preferable that all base stations of the system perform both frequency and time slot hopping. For the same reason, it is preferable that the time slot allocation of all channels of a frame of at least carriers comprising only traffic channels is changed within the frame from frame to frame. All channels may not always be hopped, however. It is better to keep the control channel of a cell (BCCH/CCCH time slot in the GSM system), for instance, in a fixed time slot allocation so that passive mobile stations monitoring the cells can find the control data without having to be synchronized with a time slot hopping sequence of each cell.

Because there are 8 or 16 (half-rate channel) time slots in a TDMA frame of the known GSM system, the time slot hopping alone provides an advantage of diversity, which would not be gained by frequency hopping until on a hopping sequence of 8 or 16 frequencies. By a combination of frequency hopping and time slot hopping according to the invention, the maximum interference diversity is achieved, the efficiency of which approaches the high degree of interference diversity of the spread spectrum CDMA principle known per se and described above.

In the following, the invention and preferred embodiments thereof are explained more closely with reference to the examples of the attached drawings, in which
Figure 1a shows schematically a reuse of frequencies in a cellular network, in which a cellular structure consists of a reuse pattern of 9 cells,
Figure 1b shows schematically one cell of the cellular network system,
Figure 2a shows the principle of the structure of signal processing units of a base station according to Figure 1b in a first embodiment of the invention,
Figure 2b shows the principle of the structure of the signal processing units of the base station according to Figure 1b in a second embodiment of the invention,
Figure 3 shows one sequence of a first embodiment of time slot hopping according to the invention,
Figure 4 shows a hopping sequence according to Figure 3 by means of a number of arrows drawn in connection with a TDMA frame, and
Figure 5 shows one sequence of a second embodiment of time slot hopping according to the invention.

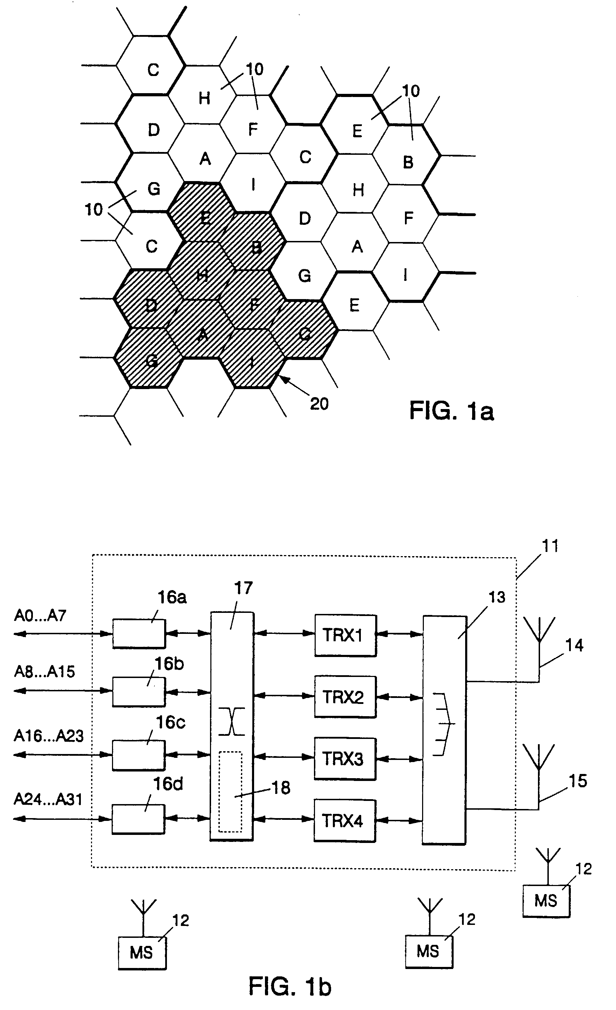

Figure 1a illustrates a cellular network system as a combination of ideal hexagons, each of which represents one cell 10. According to conventional frequency planning, hexagons are formed in a known manner to reuse patterns, to so-called clusters, which clusters 20 typically comprise e.g. 9 cells, as shown in Figure la. Frequencies available are divided among the cells of a cluster and respective frequencies are reused again in the respective cells of the next cluster. In Figure la, the frequency combination of each cell is indicated by reference marks A to I. (For instance, on a 12,5 MHz band with 62 available carrier frequencies, the difference between the carriers being 200 kHz, six or seven frequencies are allocated to each cell from said frequency band.) Accordingly, the object of interference diversity is to be protected from interferences caused by the co-channel cells of the system.

Figure 1b shows a FDMA/TDMA-based cellular network system (Figure la) within the area of one radio cell 10 thereof. A base station 11 forms a radio cell of its own in the system and serves subscribers 12 moving within the area of this cell and being in connection with their base station via a radio path. The base station 11 comprises in this case four transceiver units, which are indicated by reference marks TRX1...TRX4. The radio transceiver system shown in Figure can serve as the base station of a GSM system, in which each transceiver is of full-duplex type, the so-called duplex spacing between the reception and transmission frequencies being 45 MHz. The frequency range used by the system is typically between 800 and 1000 MHz. The outputs of the transceivers TRX1...TRX4 are connected to a radio frequency combining element 13, which connects the transmitters of the transceivers to a common transmitting antenna 14 and the receivers of the transceivers to a common receiving antenna 15. The combining element 13 is a wideband combiner suitable for being used together with frequency-hopping transceivers. Because of the losses of the wideband combiner, the number of transceivers to be connected to the same antenna is limited.

The base station shown in Figure 1b further comprises several baseband signal processing units 16a to 16d, which produce baseband modulating signals for the transceiver units TRX1 ...TRX4. Transmission channels AO...A31 are connected to the signal processing units, viz. 32 transmission channels in total, eight per each signal processing unit. The number of transmission channels connected to one signal processing unit is identical with the number of time slots in a TDMA frame of the system. The transmission channels are divided in a manner known per se into control channels and traffic channels. Between the signal processing units and the transmitters, there is a switching field 17 connecting the baseband signals to be transmitted to the transmitters and the signals to be received to the signal processing units, respectively. Frequency hopping can also be realized in a simple way by means of the switching field 17. A baseband modulating signal, which is a sequence of TDMA frames, is connected frame by frame to separate transceiver units in accordance with a predetermined sequence. Another alternative is to use hopping synthetizers in the transceivers, due to which the switching field 17 is not at all absolutely necessary. If no switching field is used, but the frequency hopping takes place by means of synthetizers, the switching field can have other tasks, e.g. tasks relating to a configuration of the equipment of the base station.

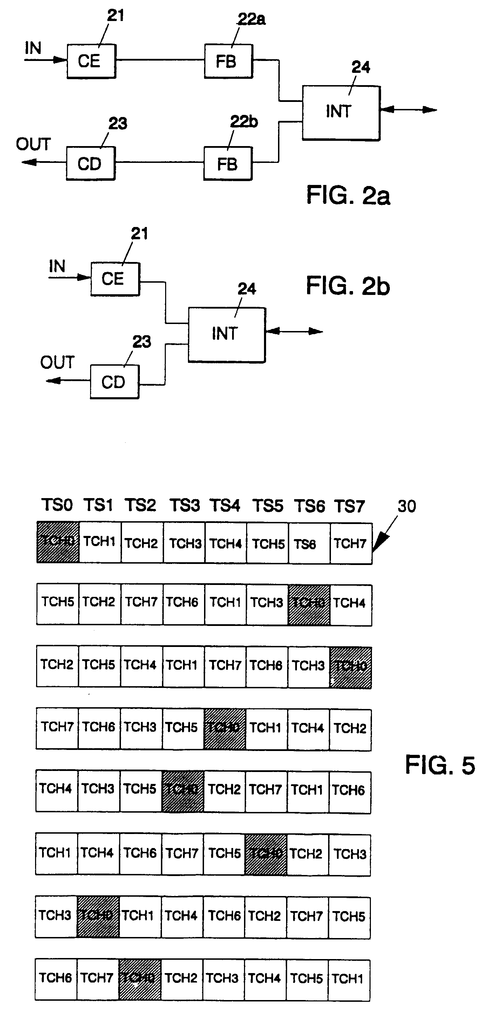

Figure 2a shows the principle of the structure of one signal processing unit 16a to 16d in a first embodiment thereof. In the signal processing units, the data to be transmitted is coded and loaded to the frame structure by combining in a cyclic manner the digital data streams offered by the transmission channels. In reception, the frame structure of the data to be received is deframed and a decoding is performed.

The data to be transmitted, coming to a signal processing unit from another part of the radio system, e.g. from a base station controller of the GSM system, are processed in a channel coding unit 21. The channel coding unit 21 can perform e.g. the following operations: transfer rate adaptation, channel coding, interleaving, encryption, composition of a TDMA frame and adjustment of transmitter power control. The channel coding unit is connected to a frame buffer 22a, in which each transmission connection has a fixed allocated storage location through the duration of the call and which contains the data to be transmitted from each transmission connection in the next TDMA frame. Accordingly, the frame buffer stores the contents of at least one TDMA frame at a time and transmits a burst to an interface unit 24 in each time slot, which burst contains the data to be transmitted in said time slot. The interface unit transmits the data further via the switching field 17 to one transceiver unit.

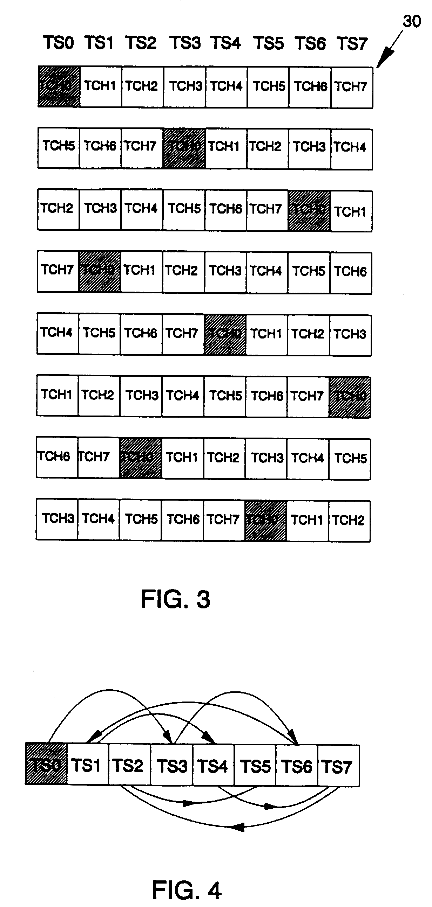

In the frame buffer 22a, there will be a normal TDMA frame, typically comprising 8 time slots TSO to TS7 (each one of them belonging to a certain transmission channel). In the frame buffer 22a, the time slot hopping of the invention is realized in such a way that the ordering of the bursts to be transmitted to the interface unit 24 is changed in accordance with a certain predetermined algorithm. Instead of the frame buffer transmitting bursts to the interface unit, the interface unit can also read the time slots of the frame buffer as per frame into the transceiver unit in accordance with a predetermined time slot hopping sequence. Figure 3 shows one such time slot hopping sequence comprising (in this case) eight sequential TDMA frames 30 (shown below each other in Figure 3), which define a multiframe structuring the stream of TDMA frames. The first frame corresponds to a "basic" TDMA frame, in which traffic channels TCHO to TCH7 are in their "reference" allocations. In the next frame, each traffic channel has always been re-allocated within the frame, and during one sequence each traffic channel has visited all time slots of the frame, after which the hopping sequence is repeated again, etc., whereby a hopping chain is formed by sequentially repeated sequences. (When N time slots participate in time slot hopping, a multiframe is needed, the length of which is N frames.) An example in Figure 3 shows the traffic channel TCHO going through the time slots of the frame in the order TSO-TS3-TS6-TS1-TS4-TS7-TS2-TS5.

Figure 4 shows the respective transitions as a set of arrows. The same transitions (the set of arrows) are valid as relative transitions for each traffic channel TCHO...TCH7.

In reception, respectively, the interface unit 24 feeds the data received from a demodulator of the receiver via the switching matrix 17 to another frame buffer 22b, which stores the contents of at least one whole TDMA frame (the data received for each transmission connection in the previous TDMA frame), performs the hopping algorithm described above in such a way that the channels take the right places within the frame and feeds the TDMA frames time slot by time slot (in parallel or series form) to a channel decoding unit 23, which performs e.g. the following operations: deframing of frame structure, de-interleaving, convolution and block decoding, error correction and adaptation of transfer rate. The channel decoding unit 23 transmits the decoded data further to the other units of the radio system; in the GSM system, for instance, to a base station controller.

Instead of in signal processing units, the frame buffers can be positioned also on the other side of the switching field 17, i.e. in connection with the transceiver units. This alternative is more disadvantageous, however, as frequency hopping is used at the same time, because the situation in each transceiver unit changes in each TDMA frame, which makes it more difficult to control the transceiver unit.

The frame buffers can also be eliminated from the signal processing units and both time slot hopping and frequency hopping can be performed entirely by means of the switching field 17. Then the switching field performs the frequency hopping as a connection in each TDMA frame slot and the time slot hopping as a connection in each time slot. The switching field is then a conventional time division switching field, which is realized by memory circuits. The contents of a TDMA frame is written in a switching memory, from which it is read in another order. In this way, the mutual order of the channels can be changed as per frame. Consequently, the principle of the structure of a signal processing unit is in this embodiment according to Figure 2b, which means that no frame buffers are needed, but the channel coding unit 21 transmits the time slots of the TDMA frame continuously in conventional numerical order to the interface unit 24 (or the interface unit reads them in conventional numerical order from the channel coding unit), and the switching field 17 is realized as a time division matrix with a switching memory, which is indicated by the reference numeral 18 in Figure 1.

Figures 3 and 4 show an embodiment of time slot hopping, in which the neighbours of each traffic channel are the same ones during almost the whole sequence. Figure 5 shows a sequence of another type with the additional benefit that it offers additional protection from crosstalk from one time slot to another. Also in this example, each traffic channel visits all time slots of the frame during one sequence (multiframe). This is, however, not necessary; neither is it necessary that the number of frames belonging to one sequence is identical with the number of time slots in a frame.

If all time slots of an 8 time slot TDMA frame are included in a hopping sequence, there are seven alternatives available for the first hop, six alternatives for the following hop, etc., which means that 7! (7 factorial) = 5040 different hopping sequences can be formed. These sequences have a varying degree of mutual correlation. In general, when n time slots are included in time slot hopping, (n-1)! different sequences are obtained at the most. In a cellular network system, these sequences can be divided among the cells.

The object of planning time slot hopping sequences is the same as that of planning frequency hopping sequences: the intention is to form sequences as uncorrelated as possible to be used in cells situated within the range of influence of each other. For instance, as far as co-channel cells are concerned, it is not enough that they have different sequences, but the mutual deviation of the sequences must be sufficient. Because the number of sequences available is great, it is possible to find sequences mutually sufficiently uncorrelated among them. Which sequences are mutually sufficiently uncorrelated each time, depends on the co-channel interference tolerance of the system (which is 9 dB in the GSM system), on the environment of the system and on the statistic behaviour model of the users.

According to the invention, time slots and transmission channels, preferably traffic channels, can be formed to groups, so that a certain group of channels shares a common group of TDMA time slots in such a manner that all channels of the channel group in question use said time slot group in accordance with a predetermined repeated sequence mutually synchronously in such a way that each channel in turn uses each time slot. Said transmission channel group comprises preferably as many channels as there are time slots in a TDMA frame of the system.

Though the invention has been described above with reference to the example of the attached drawing, it is clear that the invention is not restricted to that, but it can be modified in many ways within the scope of the inventive idea presented above and in the attached claims. It is, for instance, not necessary that the time slots forming the same transmission channel occur in directly sequential frames, and a hop is not absolutely necessary after each frame. Consequently, when the attached claims speak of sequential frames, it does not absolutely mean that the frames are directly sequential.

### List of references cited:

[1]. Recommendation GSM 05.01 "Physical layer on the radio path: General description".
[2]. Donald L. Schilling, Laurence B. Milstein, Raymond L. Pickholtz, Marvin Kullback, Frank Miller: "Spread Spectrum for Commercial Communications", IEEE Communications Magazine, April 1991.

## Claims

1. A method of increasing interference diversity in an FDMA/TDMA based cellular system, comprising
- several base stations (11), each of which forms a radio cell (12) of its own and comprises radio transceiver elements (TRX1...TRX4) for transmitting signals at least at one transmission frequency in sequential time slots and for receiving signals at least at one reception frequency in sequential time slots forming a TDMA frame (30) of the system and
- mobile stations (12) connected to the base stations (11) via a radio path,
in which system a transmission channel between a mobile station (12) and a base station (11) is realized as a burst in a time slot of the TDMA frame (30) of a carrier of the base station,
according to which method, frequency hopping is used in a first part of the base stations (11) of the system, **characterized** in that additionally, in a second part of the base stations (11) of the system, at least one transmission channel uses at least two different time slots of a TDMA frame in sequential TDMA frames (30) in accordance with a predetermined repeated sequence and that the sequences used by the separate base stations (11) are mutually coordinated in such a way that at least the sequences of the cells situated within the range of influence of each other are mutually sufficiently uncorrelated.

2. A method according to claim 1, **characterized** in that said first part and said second part comprise partly the same base stations (11).

3. A method according to claim 1, **characterized** in that said first part and said second part comprise the same base stations (11).

4. A method according to claim 3, **characterized** in that, for maximizing the interference diversity, said first part and said second part comprise all base stations (11) of the system.

5. A method according to claim 1, **characterized** in that, at a base station (11) belonging to said second part, at least part of the transmission channels forms a group sharing a common group of TDMA time slots in such a way that all transmission channels of said transmission channel group use said time slot group in accordance with a predetermined repeated sequence mutually synchronously in such a manner that each transmission channel in turn uses each time slot.

6. A method according to claim 5, **characterized** in that the transmission channel group consists of the traffic channels of the system.

7. A method according to claim 5, **characterized** in that said transmission channel group comprises as many channels as there are time slots in a TDMA frame (30) of the system.

8. An FDMA/TDMA-based cellular system, comprising
- several base stations (11), each of which forms a radio cell (12) of its own and comprises radio transceiver elements (TRX1...TRX4) for transmitting signals at least at one transmission frequency in sequential time slots and for receiving signals at least at one reception frequency in sequential time slots forming a TDMA frame (30) of the system, whereby at least part of the base stations (11) comprises frequency-hopping means (17; TRX1...TRX4) for performing frequency hopping, and
- mobile stations (12) connected to the base stations (11) via a radio path,
in which system a transmission channel between a mobile station (12) and a base station (11) is realized as a burst in a time slot of the TDMA frame (30) of a carrier of the base station,
**characterized** in that, for increasing the interference diversity of the system, at least part of the base stations (11) comprises time slot hopping means (17, 18; 22a, 22b) for changing the time slot allocation of at least one transmission channel within the frame (30) from one frame to another in accordance with a certain predetermined hopping sequence, whereby said hopping is performed both in transmission and in reception.

9. A system according to claim 8, **characterized** in that all base stations (11) of the system comprise said time slot hopping means (17, 18; 22a, 22b).

10. A system according to claim 8, **characterized** in that said time slot hopping means comprise a frame buffer (22a, 22b) both in the transmission and the reception branch, which frame buffer stores the data of at least one TDMA frame (30) at a time and from which frame buffer the data is transferred further time slot by time slot in accordance with said hopping sequence.

11. A system according to claim 8, **characterized** in that said time slot hopping means comprise a time division switching field (17), whereby the data of the TDMA frame (30) are written into the switching memory (18) of said field, from which memory (18) the data is read time slot by time slot in accordance with the predetermined hopping sequence.

## Patentansprüche

1. Verfahren zum Erhöhen des Interferenzdiversity in einem Zellularsystem auf Frequenz-/Zeitmultiplexbasis, mit:
- mehreren Basisstationen **(11)**, von denen jede eine eigene Funkzelle **(12)** bildet und Funksendeempfängerelemente **(TRX1...TRX4)** aufweist zum Senden von Signalen auf zumindest einer Sendefrequenz in sequentiellen Zeitschlitzen und zum Empfangen von Signalen auf zumindest einer Empfangs frequenz in sequentiellen Zeitschlitzen, die einen Zeitmultiplexrahmen **(30)** des Systems bilden, und
- Mobilstationen **(12)**, die mit den Basisstationen **(11)** über eine Funkstrecke verbunden sind,
wobei in dem System ein Übertragungskanal zwischen einer Mobilstation **(12)** und einer Basisstation **(11)** als ein Burst in einem Zeitschlitz des Zeitmultiplexrahmens **(30)** eines Trägers der Basisstation realisiert ist,
wobei gemäß dem Verfahren ein Frequenzsprungverfahren in einem ersten Teil der Basisstationen **(11)** des Systems verwendet wird,
**dadurch gekennzeichnet, daß**
in einem zweiten Teil der Basisstationen **(11)** des Systems zusätzlich durch zumindest einen Übertragungskanal zumindest zwei verschiedene Zeitschlitze eines Zeitmultiplexrahmens aus sequentiellen Zeitmultiplexrahmen **(30)** in übereinstimmung mit einer vorbestimmten wiederholten Sequenz verwendet werden, und daß die durch die getrennten Basisstationen **(11)** verwendeten Sequenzen gegenseitig in der Weise koordiniert sind, daß zumindest die Sequenzen der innerhalb des Bereichs einer gegenseitigen Beeinflussung angeordneten Zellen gegenseitig ausreichend unkorreliert sind.

2. Verfahren nach Anspruch 1,
**dadurch gekennzeichnet, daß**
der erste Teil und der zweite Teil teilweise dieselben Basisstationen **(11)** aufweisen.

3. Verfahren nach Anspruch 1,
**dadurch gekennzeichnet, daß**
der erste Teil und der zweite Teil dieselben Basisstationen **(11)** aufweisen.

4. Verfahren nach Anspruch 3,
**dadurch gekennzeichnet, daß**
der erste Teil und der zweite Teil zur Maximierung des Interferenzdiversitys alle Basisstationen **(11)** des Systems aufweisen.

5. Verfahren nach Anspruch 1,
**dadurch gekennzeichnet, daß**
an einer zu dem zweiten Teil gehörenden Basisstation **(11)** zumindest ein Teil der Übertragungskanäle eine Gruppe bildet, die eine gemeinsame Gruppe von Zeitmultiplexzeitschlitzen in der Weise gemeinsam nutzen, daß alle Übertragungskanäle der Übertragungskanalgruppe die Zeitschlitzgruppe in Übereinstimmung mit einer vorbestimmten wiederholten Frequenz in gegenseitig synchroner Weise verwenden, so daß jeder Übertragungskanal aufeinanderfolgend jeden Zeitschlitz verwendet.

6. Verfahren nach Anspruch 5,
**dadurch gekennzeichnet, daß**
die Übertragungskanalgruppe aus den Verkehrskanälen des Systems besteht.

7. Verfahren nach Anspruch 5,
**dadurch gekennzeichnet, daß**
die Übertragungskanalgruppe so viele Kanäle aufweist, wie Zeitschlitze in einem Zeitmultiplexrahmen **(30)** des Systems vorhanden sind.

8. Zellularsystem auf Frequenz-/Zeitmultiplexbasis, mit
- mehreren Basisstationen **(11)**, von denen jede eine eigene Funkzelle **(12)** bildet und Sendeempfängerelemente **(TRX1...TRX4)** aufweist zum Senden von Signalen auf zumindest einer Sendefrequenz in sequentiellen Zeitschlitzen und zum Empfangen von Signalen auf zumindest einer Empfangs frequenz in sequentiellen Zeitschlitzen, die einen Zeitmultiplexrahmen **(30)** des Systems bilden, wobei zumindest ein Teil der Basisstationen **(11)** eine Frequenzsprungeinrichtung **(17; TRX1...TRX4)** aufweist zum Durchführen eines Frequenzsprungverfahrens, und
- Mobilstationen **(12)**, die mit den Basisstationen **(11)** über eine Funkstrecke verbunden sind,
wobei in dem System ein Übertragungskanal zwischen einer Mobilstation **(12)** und einer Basisstation **(11)** als ein Burst in einem Zeitschlitz des Zeitmultiplexrahmens **(30)** eines Trägers der Basisstation realisiert ist,
**dadurch gekennzeichnet, daß**
zur Erhöhung des Interferenzdiversitys des Systems zumindest ein Teil der Basisstationen **(11)** eine Zeitschlitzsprungeinrichtung **(17, 18; 22a, 22b)** aufweist zum Ändern der Zeitschlitzzuweisung von zumindest einem Übertragungskanal innerhalb des Rahmens **(30)** von einem Rahmen zu einem anderen in Übereinstimmung mit einer gewissen vorbestimmten Sprungsequenz, wobei das Sprungverfahren sowohl beim Senden als auch beim Empfangen durchgeführt wird.

9. System nach Anspruch 8,
**dadurch gekennzeichnet, daß**
alle Basisstationen **(11)** des Systems die Zeitschlitzsprungeinrichtung **(17, 18; 22a, 22b)** aufweisen.

10. System nach Anspruch 8,
**dadurch gekennzeichnet, daß**
die Zeitschlitzsprungeinrichtung einen Rahmenpuffer **(22a, 22b)** sowohl in dem Sende- als auch in dem Empfangs zweig aufweist, wobei in dem Rahmenpuffer die Daten von zumindest einem Zeitmultiplexrahmen **(30)** zu einem Zeitpunkt gespeichert sind und wobei die Daten aus dein Rahmenpuffer zeitschlitzweise in Übereinstimmung mit der Sprungfrequenz weiterübertragen werden.

11. System nach Anspruch 8,
**dadurch gekennzeichnet, daß**
die Zeitschlitzsprungeinrichtung ein Zeitmultiplexschaltfeld **(17)** aufweist, wobei die Daten des Zeitmultiplexrahmens **(30)** in den Schaltspeicher **(18)** des Felds eingeschrieben werden, und wobei die Daten zeitschrittsweise in Übereinstimmung mit der vorbestimmten Sprunqsequenz aus dem Speicher **(18)** ausgelesen werden.

## Revendications

1. Procédé d'augmentation de la diversité du brouillage dans un système cellulaire AMRF/AMRT, comprenant :
- plusieurs stations de base (11), dont chacune d'elles forme en elle-même une cellule radioélectrique (12) et comprend des éléments émetteurs-récepteurs radioélectriques (TRX1 ... TRX4) destinés à émettre des signaux sur au moins une fréquence d'émission, dans des tranches de temps séquentielles, et à recevoir des signaux sur au moins une fréquence de réception, dans des tranches de temps séquentielles formant une trame AMRT (30) du système, et
- des stations mobiles (12) reliées aux stations de base (11) par voie radioélectrique,
système dans lequel un canal de transmission entre une station mobile (12) et une station de base (11) est réalisé sous la forme d'une salve dans une tranche de temps de la trame AMRT (30) d'une porteuse de la station de base,
procédé selon lequel un saut de fréquence est utilisé dans une première partie des stations de base (11) du système, caractérisé en ce qu'en outre, dans une deuxième partie des stations de base (11) du système, au moins un canal de transmission utilise au moins deux tranches de temps différentes d'une trame AMRT de trames AMRT séquentielles (30), selon une séquence répétée prédéterminée, et en ce que les séquences utilisées par les stations de base distinctes (11) sont coordonnées les unes avec les autres de telle sorte qu'au moins les séquences des cellules se trouvant dans la portée d'influence des unes avec les autres sont suffisamment non corrélées entre elles.

2. Procédé selon la revendication 1, caractérisé en ce que ladite prcmière partie et ladite deuxième partie comprennent en partie les mêmes stations de base (11).

3. Procédé selon la revendication 1, caractérisé en ce que ladite première partie et ladite deuxième partie comprennent les mêmes stations de base (11).

4. Procédé selon la revendication 3, caractérisé en ce que, pour maximiser la diversité du brouillage, ladite première partie et ladite deuxième partie comprennent toutes les stations de base (11) du système.

5. Procédé selon la revendication 1, caractérisé en ce que, au niveau d'une station de base (11) appartenant à ladite deuxième partie, au moins une partie des canaux de transmission forme un groupe partageant un groupe commun de tranches de temps AMRT de telle sorte que tous les canaux de transmission dudit groupe de canaux de transmission utilisent ledit groupe de tranches de temps selon une séquence répétée prédéterminée, en synchronisme les uns avec les autres, de façon que chaque canal de transmission utilise à tour de rôle chaque tranche de temps.

6. Procédé selon la revendication 5, caractérisé en ce que le groupe de canaux de transmission est constitué des canaux de trafic du système.

7. Procédé selon la revendication 5, caractérisé en ce que ledit groupe de canaux de transmission comprend autant de canaux qu'il y a de tranches de temps dans la trame AMRT (30) du système.

8. Système cellulaire AMRF/AMRT, comprenant :
- plusieurs stations de base (11), dont chacune d'elles forme en elle-même une cellule radioélectrique (12) et comprend des éléments émetteurs-récepteurs radioélectriques (TAX1 ... TRX4) destinés à émettre des signaux sur au moins une fréquence d'émission, dans des tranches de temps séquentielles, et à recevoir des signaux sur au moins une fréquence de réception, dans des tranches de temps séquentielles formant une trame AMRT (30) du système, ce en conséquence de quoi au moins une partie des stations de base (11) comprend des moyens de saut de fréquence (17 ; TAX1 ... TRX4) servant à effectuer un saut de fréquence, et
- des stations mobiles (12) reliées aux stations de base (11) par voie radioélectrique,
système dans lequel un canal de transmission entre une station mobile (12) et une station de base (11) est réalisé sous la forme d'une salve dans une tranche de temps de la trame AMRT (30) d'une porteuse de la station de base,
caractérisé en ce qu'en outre, pour augmenter la diversité de brouillage du système, au moins une partie des stations de base (11) comprend des moyens de saut de tranche de temps (17, 18 ; 22a, 22b) pour changer l'attribution de tranche de temps d'au moins un canal de transmission de la trame (30), d'une trame à une autre, selon une certaine séquence de saut prédéterminée, ce en conséquence de quoi ledit saut est effectué en émission ainsi qu'en réception.

9. Système selon la revendication 8, caractérisé en ce que toutes les stations de base (11) du système comprennent lesdits moyens de saut de tranche de temps (17, 18 ; 22a, 22b).

10. Système selon la revendication 8, caractérisé en ce que lesdits moyens de saut de tranche de temps comprennent un tampon de trame (22a, 22b) dans la branche d'émission ainsi que dans la branche de réception, lequel tampon de trame stocke les données d'au moins une trame AMRT (30) à un instant donné, et à partir duquel tampon de trame les données sont retransmises tranche de temps par tranche de temps, selon ladite séquence de saut.

11. Système selon la revendication 8, caractérisé en ce que lesdits moyens de saut de tranche de temps comprennent un champ de commutation temporelle (17), ce en conséquence les données de la trame AMRT (30) sont écrites dans la mémoire de commutation (18) du champ, mémoire (18) à partir de laquelle les données sont lues tranche de temps par tranche de temps, selon une séquence de saut prédéterminée.
